# EUROPEAN PATENT SPECIFICATION

(11) **EP 2 263 444 B1**
(45) Date of publication and mention of the grant of the patent: **14.11.2012**
(21) Application number: 10162896.4
(22) Date of filing: 14.05.2010
(51) Int. Cl.: A01G 3/037

(54) **Electric cutting tool**
Elektrische Schneidvorrichtung
Outil de coupe électrique

(30) Priority: 15.05.2009 IT PI20090058
(43) Date of publication of application: 22.12.2010
(73) Proprietor: AI.MA AUTOMAZIONE INDUSTRIALE & MACCHINE AGRICOLE S.R.L., 56040 Cenaia (PI) (IT)
(72) Inventor: Bacci, Massimiliano, 56040, Cenaia (PI) (IT)
(74) Representative: Celestino, Marco

(56) References cited:
- EP-A1- 1 350 428
- EP-A1- 1 842 632

## Description

### Field of the invention

The present invention relates to an article for agriculture and gardening and more precisely it relates to an electric cutting instrument, in particular for operations of pruning branches, shrubs, tendrils and the like.

### Description of the prior art

As well known, pruning work comprises a wide variety of operations for changing the spontaneous way of growing branches and fruit of a plant.

Pruning operations are carried out, in particular, on tree-like plants, both fruit plants and ornamental plants, by cutting determined branches of the plant in order to change its structure and accelerate its growth, by means cutting instruments, usually scissors, or cutters for pruning. This way, a correct balance is obtained between the leafage and roots, to obtain a high production and/or a high quality of the products of the plant.

Since, each plant has determined morphological features, it is necessary that the operation of pruning is effected manually by one or more operators on each single plant, in order to customize the cut to the plant.

The use of traditional cutting instruments causes a high waste of energy for pruning operators.

The drawbacks deriving from the use of traditional scissors, or cutters, are in part overcome by the use motor cutting instruments, normally fed by a 12V lead battery.

Normally, cutting instruments of electric type provide a mechanical transmission comprising a conical pinion gear, mounted to the shaft of an electric motor, and a curved rack that meshes with the conical pinion gear and integral to a cutting blade. The operator acts, then on a push button, for operating the electric motor that causes the rotation of the conical pinion gear. Therefore, the cutting blade rotates about the rotation axis of the curved rack and acts in combination with a fixed counter-blade, cutting the branch of the plant.

The conical pinion gear used in electric scissors of the prior art is cantilevered. In particular, the load of the blade that bushes against the branch during the cutting step is transmitted by the conical pinion gear to the curved rack present on the movable blade. In particular, it is desirable that the cutters, or scissors, are as powerful as possible, in order to cut branches up to 2-3 cm of diameter without difficulty. In this case, the torque of the pinion gear on the rack is very high.

Therefore, for conferring a high mechanical resistance against the conical pinion gear and to avoid that flexion actions acting on it in case of high torques can affect the correct operation of the scissors, it must necessarily be oversized. Therefore, the resulting cutting instrument has a high weight and size and then can be handled in a difficult way by the operator in the pruning work.

Furthermore, also using a conical pinion gear of high size is not in any case possible to avoid completely that during the use of the cutting instrument it can be damaged, in particular when cutting branches of large diameter with the application the maximum torque.

Another drawback of the cutting instruments of electric type is that the batteries are usually lead batteries and therefore heavy and bulky.

In EP1350428 a cutting instrument is described, such as a cutter, or a scissors, of the prior art. The instrument has a knives that can move towards/away from each other by a transmission gear comprising a pinion gear and a rack. Each blade is pivotally engaged with an end of a respective connecting arm having the other end connected to a tubular support. Furthermore, a motor is provided that operates the rotation of the pinion gear by a drive shaft. The latter is mounted to a drive shaft support terminating with the conical pinion gear. Therefore, also in this case the conical pinion gear is supported only at an end opposite to the rack. Therefore, also in this case the pinion gear works cantilevered and has the above described drawbacks.

### Summary of the invention

It is then a feature of the present invention to provide an electric cutting instrument in particular for pruning branches, tendrils, etc., that is highly strong and therefore can be used also for cutting much thicker branches, tendrils, etc. without the risk of damaging the instrument.

It is also a feature of the present invention to provide an electric cutting instrument, in particular for pruning branches, tendrils, etc., that is much lighter and more handy with respect to similar articles of the prior art.

It is a particular feature of the present invention to provide a cutting instrument of electric type having a battery that is lighter and less cumbersome with respect to the batteries commonly used in the cutting instruments of the prior art.

It is another particular feature of the present invention to provide a cutting instrument of electric type that has a battery of rechargeable type that makes it possible to achieve high savings with respect to similar devices of the prior art.

These and other features are accomplished with one exemplary electric cutting instrument, in particular for pruning branches, tendrils, and the like comprising:
- a grip body with adapted to be held by a user of the cutting instrument;
- a motor means housed in said grip body and operatively connected to an electric energy supply means, said motor means comprising a stator part and a drive shaft;
- a mounting body housed in said grip body, said mounting body integral to said stator part;
- a first and a second cutting blades that can move towards/away from each other, said first and said second cutting blades mounted to said mounting body;
- a movement transmission means that is adapted to transmit the movement of said drive shaft to at least one among said first and said second cutting blades, said transmission means comprising:
   - a pinion gear having a first end and a second end opposite to the first end;
   - a first support means that is adapted to connect operatively said pinion gear to said drive shaft at said first end;
   - a rack, that is adapted to mesh with said pinion gear, said first cutting blade being integral to said rack; whose main feature is that said mounting body comprises a second support means that is adapted to support said pinion gear at said second end, said second support means adapted to support said pinion gear at said second end to allow a free rotation with respect to said mounting body and at the same time to discharge on said mounting body flexion stresses between the rack and the pinion gear. Advantageously, the pinion gear is a conical pinion gear.

In particular, the rack is a curved rack, or a sector of a ring gear.

In particular, the second support means can comprise a recess that is made in the mounting body and a protrusion that extends from the second end of the pinion gear, said protrusion adapted to pivotally engage with the recess that is made in the mounting body. In this case, the recess works as support for the protrusion.

Alternatively, the second support means can comprise a protrusion at the mounting body and a recess at the second end of the pinion gear, said protrusion that extends from the mounting body adapted to pivotally engage with the recess. In this case, the protrusion from the mounting body works as support for the recess.

This way, the pinion gear is supported at both the first and the second end. Therefore, differently from the cutting instruments of the prior art, the pinion gear according to the invention is not cantilevered. Therefore, the flexion loads generated during operation are discharged on the mounting body.

This particular technical solution allows using a pinion gear of reduced size and therefore reduces remarkably also the weight. Therefore, it is possible to reduce the size and the overall weight of the cutting instrument with respect to electric scissors, or cutters of the prior art assisting remarkably the use by the end user even if maintaining a high cutting torque like that of larger scissors.

In particular, both the protrusion and the recess may have substantially cylindrical shape.

Preferably, between the protrusion and the recess a means is provided for reducing the friction of rotation.

In particular, the means for reducing the friction of rotation can be selected from the group comprised of:
- a roller bearing;
- a bush, in particular a brass bearing.

For example, the bush can be either a brass bearing, or an autolubricant material bush.

In particular, the first cutting blade is integral to the curved rack, for example by means of screws, nails, or the like, and is pivotally connected to the mounting body, whereas the second cutting blade is integral to the mounting body and is therefore fixed. More precisely, in operation conditions, the first cutting blade is movable rotationally towards/away from the second cutting blade, which, instead, remains fixed and works as counter-blade.

In particular, the mounting body comprises an engagement portion which is adapted to engage said mounting body with said second blade and a fastening portion that is adapted to fasten said mounting body to said stator part of said motor means.

Advantageously, the portion for engaging the mounting body with the second blade comprises respective matching surfaces that, in use, are arranged adjacent to each other.

In particular, the matching surfaces can be substantially flat for being connected to each other by means of screws, bolts, or the like, to allow the rotation of the second blade on the mounting body.

Advantageously between the engagement portion and the fastening portion the mounting body a recessed portion is provided for the conical pinion gear, said recessed portion being equipped with said second support means.

In particular, the recessed portion can be equipped with a side opening, and said pinion gear is in mesh with said rack through the side opening. Furthermore, the side opening makes it possible to arrange the pinion gear in the recessed portion with freedom of rotation with respect to it.

In particular, the pinion gear can be fitted directly on the shaft of the motor means at the first end. More in detail, at the first end the pinion gear has a recess in which the drive shaft is inserted and blocked.

Advantageously, the second cutting blade comprises an engagement portion equipped with an opening that has a polygonal cross section, for example hexagonal, that is adapted to receive a locking portion, which has a corresponding cross section, of a pin that crosses the curved rack and the first blade.

In particular, the cutting blade and the counter-blade can be arranged overlapped and closed "sandwich-like" between the rack and the mounting body by a bolt. More in detail, the bolt crosses the curved rack, the cutting blade, the counter-blade and the mounting body and the whole is tightened by a anti-unscrewing device of known type.

Advantageously, the first blade and the rack are engaged to the cylindrical screw portion of the bolt at respective circular holes in order to freely rotate about it, whereas the counter-blade engages with the screw same at an hexagonal cross section hole which prevents it from an undesired rotation.

According to another aspect of the invention a cutting instrument of electric type, in particular for pruning branches, tendrils, and the like comprises:
- at least one battery for supplying a measured electric current;
- a cutting instrument, as above described, comprising a motor means operatively connected to said, or each, battery.

Advantageously, the, or each, battery is a lithium battery, in particular of rechargeable type.

### Brief description of the drawings

The invention will be made clearer with the following description of an exemplary embodiment thereof, exemplifying but not limitative, with reference to the attached drawings in which:
- figure 1 shows in a longitudinal sectional view, according to a first cross sectional plane, an electric cutting instrument, in particular for pruning branches, tendrils, and the like according to the invention;
- figure 2 shows an elevational side view of the cutting instrument of Fig. 1;
- figure 3 shows the electric cutting instrument of Fig. 1 in a longitudinal sectional view, according to a second cross sectional plane;

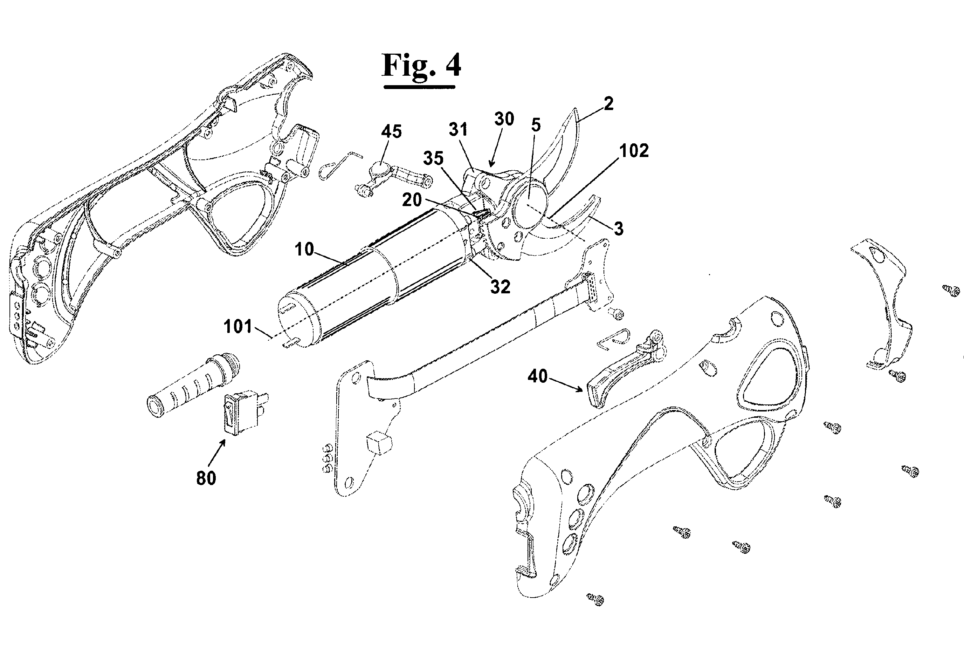

- figure 4 shows an exploded perspective view of the electric cutting instrument of Fig. 1;
- figure 5 shows an exploded perspective view of the cutting head of the electric type instrument of Fig. 4;
- figure 6 shows in an assembled configuration the

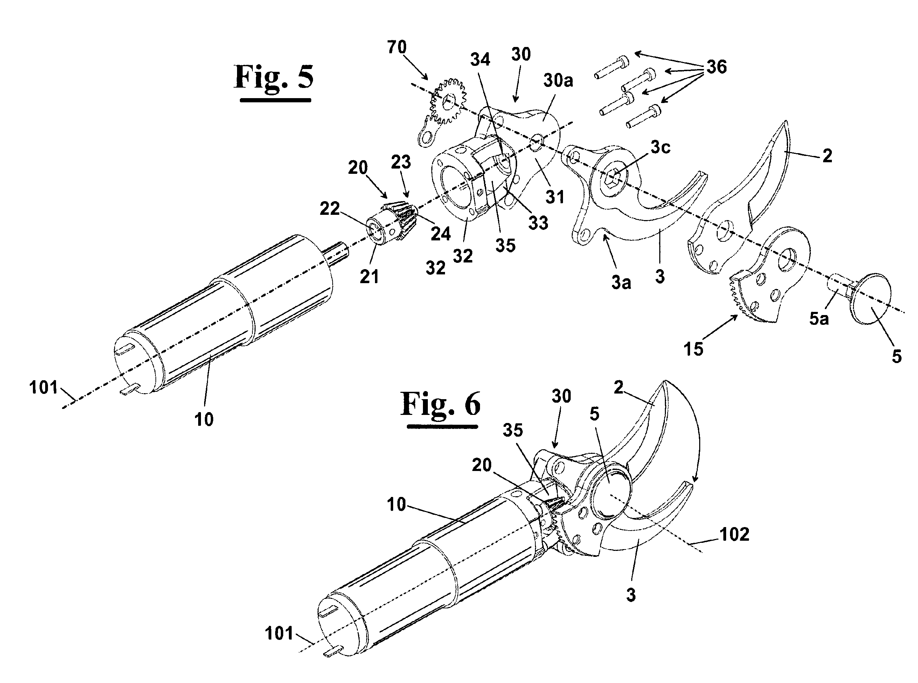

cutting head of the electric type instrument of Fig. 5;

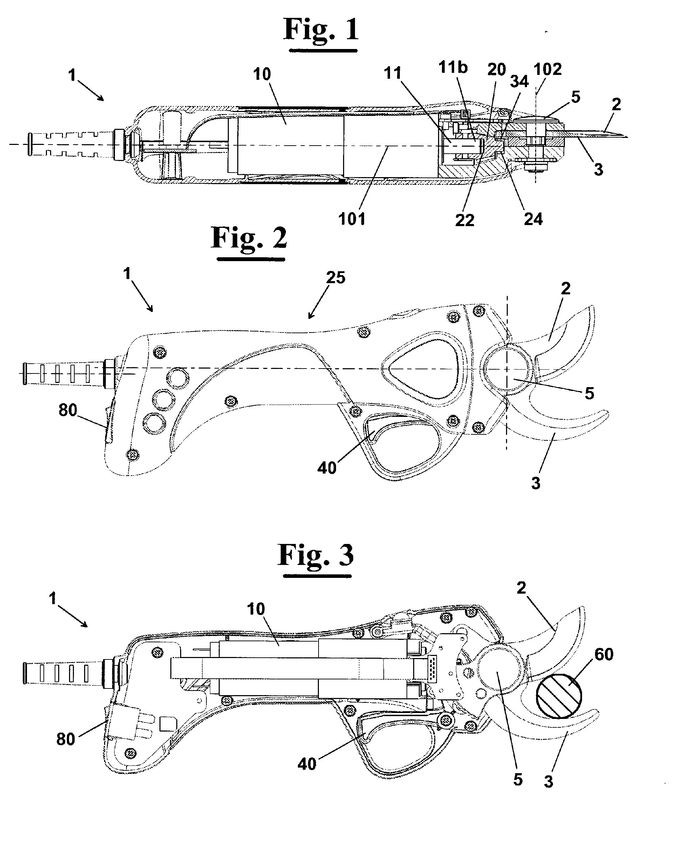

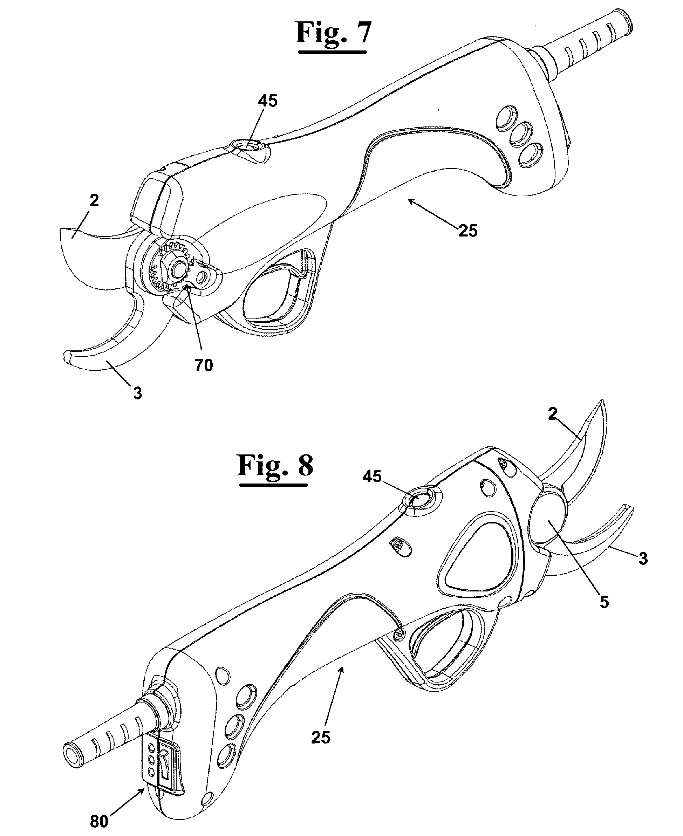

- figure 7 shows the cutting instrument of Fig. 1 in a perspective elevational front view;
- figure 8 shows the cutting instrument of Fig. 1 in a perspective rear view;

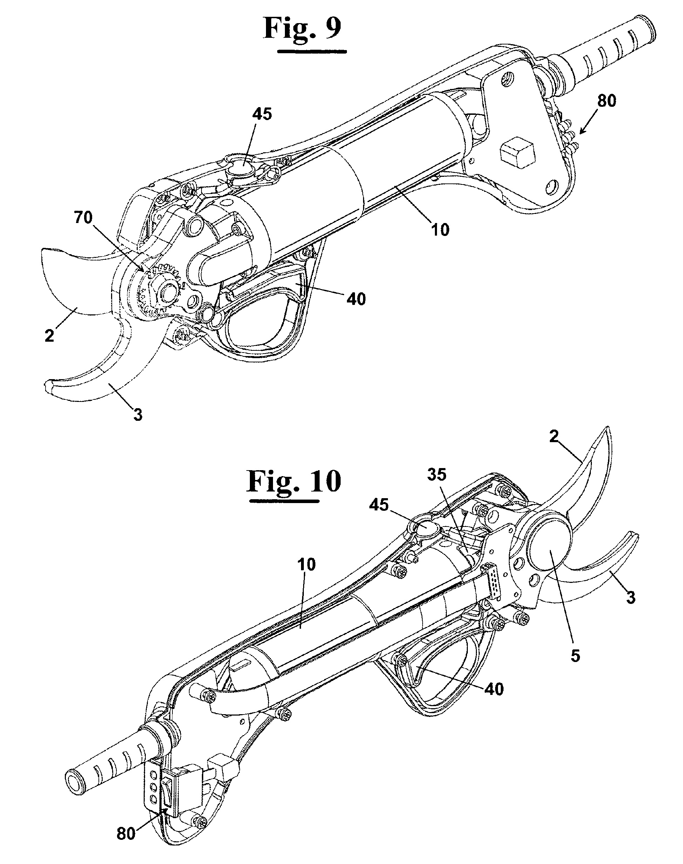

- figure 9 shows the cutting instrument of Fig. 1 a partial cross sectional perspective front view;
- figure 10 shows the cutting instrument of Fig. 1 a partially cross sectional perspective rear view;

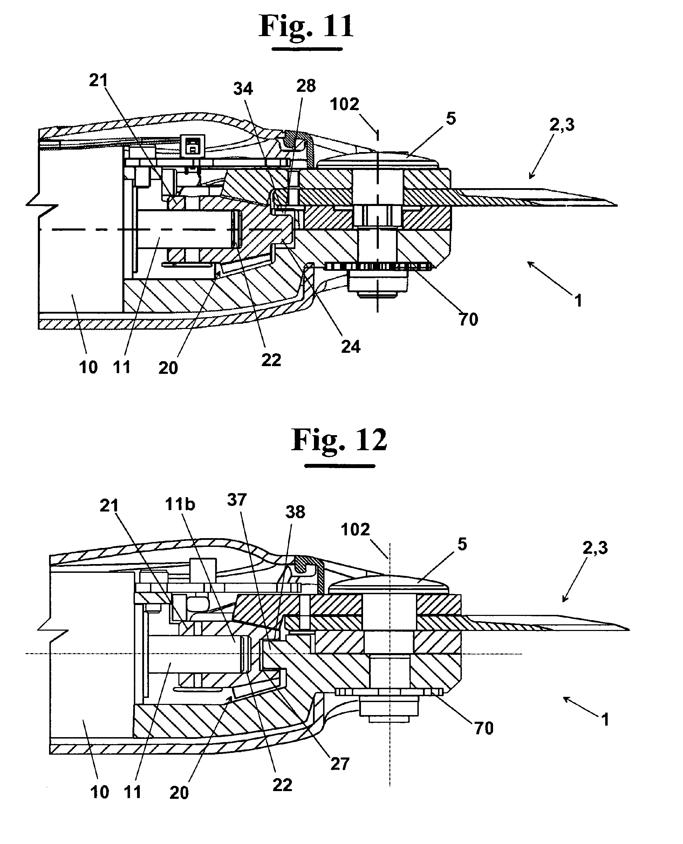

- figure 11 shows in detail a portion of the cross sectional longitudinal view of the cutting instrument of Fig. 1;
- figure 12 diagrammatically shows an exemplary embodiment of the invention for the second support means.

### Detailed description of some exemplary embodiments

As shown in Fig. 1, a cutting instrument 1 of electric type, according to the invention, in particular for pruning branches 60, comprises a grip body 25 at which an user can grip instrument1 and a push button 80 to operate the rotation of a cutting blade 2 about a rotation axis 102. Cutting blade 2 can rotate about its rotation axis 102 and move from a distant position to an approached position, or vice-versa, with respect to a fixed counter-blade 3.

In particular, counter-blade 3 has a surface 3a that is fastened, for example by means of screws, bolts, or the like, to a surface 30a of a mounting body 30.

Cutting blade 2 is connected to a shaft 11 of an electric motor 10 by a mechanical transmission comprising essentially a pinion gear 20, preferably a conical pinion gear, and a rack, preferably a curved rack 15, or a sector of a ring gear.

More in detail, cutting blade 2 and counter-blade 3 are overlapped and closed "sandwich-like" between curved rack 15 and mounting body 30 by a bolt 5. The latter crosses therefore curved rack 15, cutting blade 2, counter-blade 3 and mounting body 30 and the whole is tightened by a anti-unscrewing device 70 of known type to avoid that during the use of the cutting instrument 1, bolt 5 can unscrew and affecting the correct operation. Blade 2 and curved rack 15 are engaged with cylindrical screw portion 5a of bolt 5 at respective circular holes 2c and 15c, in order to freely rotate about it, whereas counter-blade 3 engages by screw portion 5a at a hexagonal cross section hole 3c that prevents it from an unwanted rotation.

Conical pinion gear 20 has a first end 21 and a second end 23 opposite to first end 21.

In particular, at first end 21, a first support means for pinion gear 20 is provided. In a possible exemplary embodiment, the first support means consists of an end portion 11b of drive shaft 11 of motor 10 that holds pinion gear 20 at a recess 22 that is obtained at first end 21. This way, when motor 10 is operated conical pinion gear 20 rotates integrally to shaft 11 about a rotation axis 101.

Pinion gear 20 comprises a head that is adapted to engage with a curved rack 15 integral to cutting blade 2. Therefore, the rotation of conical pinion gear 20 about its axis 101 causes the rotation of curved rack 15 and then of cutting blade 2 about its axis 102.

According to the invention, pinion gear 20, at second end 23 opposite to first end 21, has a second support means. For example, the second support means can comprise a protrusion 24 that protrude from the second end of pinion gear 20 and is adapted to be put in a recess, or bush, 34 that is made in mounting body 30.

More precisely, protrusion 24 is housed in recess 34 with freedom of rotation with respect to it. Therefore, conical pinion gear 20 is supported both at first end 21 and at second end 23. Therefore, differently from the cutting instruments of the prior art, conical pinion gear 20 is not cantilevered. Then, the flexion loads that bear on conical pinion gear 20 in operation conditions are discharged at the opposite ends 21 and 23.

This reduces remarkably the size and then the weight of conical pinion gear 20 and therefore of electric instrument 1 assisting remarkably the use by the end user.

Furthermore, it is possible to use the electric instrument 1 thus obtained also for cutting branches of large size without affecting its correct operation, or causing damages.

Between recess 34 and protrusion 24 an antifriction bush 28 can be provided, or alternatively, a brass bearing, or a roller bearing in order to reduce the friction of rotation in operation conditions.

Electric motor 10 can be supplied by a lithium battery of rechargeable type, not shown in the figures. This allows lightening further the apparatus consisting of the battery and of cutting instrument 1 not hindering therefore an action of the user.

Mounting body 30 comprises an engagement portion 31 for engagement with counter-blade 3 and a fastening portion 32 for fastening to the body of electric motor 10, for example by means of screws 36.

Among engagement portion 31 and fastening portion 32 a recessed portion is provided 33 having tubular shape, for example substantially cylindrical, in which conical pinion gear 20 is mounted with freedom of rotation.

More in detail, recessed portion 33 has an opening, or "window" 35 to let curved rack 15 to fit on conical pinion gear 20. In an exemplary embodiment not shown in the figures, recessed portion 33 may have reticular shape.

In Fig. 12, finally, an exemplary embodiment is diagrammatically shown of the invention where mounting body 30 has a protrusion 37 that is adapted to engage with a recess 27 that is obtained at second end 23 of conical pinion gear 20. Like in the previous case, between recess 27 and protrusion 37 a antifriction bush 38 can be provided, or alternatively, a brass bearing, or a roller bearing, in order to reduce the friction of rotation in operation conditions.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Electric cutting instrument, in particular for pruning branches, tendrils, and the like comprising:
- a grip body (25) adapted to be held by a user of said cutting instrument (1);
- a motor means (10) housed in said grip body (25) and operatively connected to an electric energy supply means, said motor means (10) comprising a stator part and a drive shaft (11);
- a mounting body (30) connected to said grip body (25), said mounting body (30) integral to said stator part;
- a first and a second cutting blades (2,3) that can move towards/away from each other, said first and said second cutting blades (2,3) being mounted to said mounting body (30);
- a movement transmission means that is adapted to transmit a movement of said drive shaft (11) to at least one among said first and said second cutting blades (2,3), said transmission means comprising:
- a pinion gear (20) having a first end (21) and a second end (23) opposite to the first end;
- a first support means (11b,22) that is adapted to connect operatively said pinion gear to said drive shaft (11) at said first end (21);
- a rack (15) that is adapted to mesh with said pinion gear (20), said first cutting blade (2) being integral to said rack(15);
**characterised in that**
said mounting body (30) comprises a second support means (24,34) that is adapted to support said pinion gear (20) at said second end (23), said second support means (24,34, 27,37) adapted to support said pinion gear (20) at said second end (23) to allow a free rotation with respect to said mounting body (30) to and at the same time to discharge on said mounting body (30) flexion stresses between said rack (15) and said pinion gear (20).

2. Electric cutting instrument, according to claim 1, wherein said second support means (24,34, 27,37) comprises a recess (34) that is made in said mounting body (30) and a protrusion (24) that extends from said second end (23) of said pinion gear (20) and that is adapted to pivotally engage with said recess (34) such that said recess (34) works as support for said protrusion (24).

3. Electric cutting instrument, according to claim 1, wherein said second support means (24,34,27,37) comprises a protrusion (37) at said mounting body (30) and a recess (27) at said second end (23) of said pinion gear (20), said protrusion (37) of said mounting body (30) adapted to pivotally engage with said recess (27), such that said protrusion (37) works as support for said recess (27).

4. Electric cutting instrument, according to claim 2, or 3, wherein said protrusion (24,37) and said recess (34,27) have cylindrical shape in order to form a rotatable coupling.

5. Electric cutting instrument, according to claim 2 or 3, wherein between said protrusion (24,37) of said pinion gear (20) and said recess (34,27) a means is provided for reducing the friction of rotation (28,38).

6. Electric cutting instrument, according to claim 5, wherein said means (28,38) for reducing said friction of rotation comprises a roller bearing.

7. Electric cutting instrument, according to claim 5, wherein said means (28,38) for reducing said friction of rotation comprises an antifriction bush, in particular a brass bearing.

8. Electric cutting instrument, according to claim 1, wherein said first cutting blade (2) is integral to said rack (15) whereas said second cutting blade (2) is a counter-blade (3) integral to said mounting body (30).

9. Electric cutting instrument, according to claim 1, wherein said mounting body (30) comprises furthermore:
- an engagement portion (31) that is adapted to engage said mounting body (30) and said second blade (3) with each other;
- a fastening portion (32) that is adapted to fasten said mounting body to said grip body (25);
- a recessed portion (33) for said pinion gear (20), said recessed portion (33) equipped with said second support means (24,34, 27,37).

10. Electric cutting instrument, according to claim 9, wherein said recessed portion (33) is arranged between said engagement portion (31) and said fastening portion (32).

11. Electric cutting instrument, according to claim 9, wherein said recessed portion (33) has a side opening (35), said pinion gear (20) adapted to mesh with said rack (15) through said side opening (35).

12. Electric cutting instrument, according to claim 1, wherein said pinion gear (20) is a conical pinion gear and said rack is a curved rack (15).

13. Cutting instrument of electric type, in particular for pruning branches, tendrils, and the like, comprising:
- at least one battery for supplying a measured electric current;
- a cutting instrument (1) comprising a motor means (10) operatively connected to said, or each, battery;
**characterised in that** it comprises a cutting instrument (1), according to claims from 1 to 12.

14. Cutting instrument of electric type, according to claim 13, wherein said, or each, battery is a lithium battery.

15. Cutting instrument of electric type, according to claim 14, wherein said, or each, battery is a lithium battery of rechargeable type.

## Patentansprüche

1. Elektrisches Schneidgerät, insbesondere zum Beschneiden von Zweigen, Ranken und Ähnlichem, umfassend:
- einen Griffkörper (25), welcher ausgelegt ist, von einem Benutzer des Schneidgeräts (1) gehalten zu werden;
- einen Motor (10), welcher im Griffkörper (25) aufgenommen ist und betriebsbereit mit einem elektrischen Stromversorgungsmittel verbunden ist, wobei der Motor (10) einen Statorteil und eine Antriebswelle (11) umfasst;
- einen Befestigungskörper (30), welcher mit dem Griffkörper (25) verbunden ist, wobei der Befestigungskörper (30) einstückig mit dem Statorteil ausgeführt ist;
- eine erste und eine zweite Schneidklinge (2, 3), welche sich zueinander/auseinander bewegen können, wobei die erste und die zweite Schneidklinge (2, 3) am Befestigungskörper (30) angebracht sind;
- ein Bewegungsübertragungsmittel, welches ausgelegt ist, um eine Bewegung der Antriebswelle (11) auf wenigstens eine der beiden ersten und zweiten Schneidklingen (2, 3) zu übertragen, wobei das Übertragungsmittel umfasst:
- ein Ritzelzahnrad (20) mit einem ersten Ende (21) und einem zweiten Ende (23) gegenüberliegend zu dem ersten Ende;
- ein erstes Tragemittel (11b, 22), welches ausgelegt ist, um das Ritzelzahnrad mit der Antriebswelle (11) am ersten Ende (21) wirksam zu verbinden;
- eine Zahnstange (15), welche ausgelegt ist, um mit dem Ritzelzahnrad (20) zu kämmen, wobei die erste Schneidklinge (2) einstückig mit der Zahnstange (15) ist;
**dadurch gekennzeichnet, dass**
der Befestigungskörper (30) ein zweites Tragemittel (24, 34) umfasst, welches ausgelegt ist, um das Ritzelzahnrad (20) am zweiten Ende (23) zu unterstützen, wobei das zweite Tragemittel (24, 34, 27, 37) ausgelegt ist, das Ritzelzahnrad (20) am zweiten Ende (23) zu unterstützen, um eine freie Rotation in Bezug auf den Befestigungskörper (30) zu erlauben und gleichzeitig an den Befestigungskörper (30) Biegespannungen zwischen der Zahnstange (15) und dem Ritzelzahnrad (20) abzuleiten.

2. Elektrisches Schneidgerät nach Anspruch 1, wobei das zweite Tragemittel (24, 34, 27, 37) eine Vertiefung (34), welche im Befestigungskörper (30) hergestellt ist, und einen Vorsprung (24) umfasst, welcher sich vom zweiten Ende (23) des Ritzelzahnrads (20) erstreckt und welcher ausgelegt ist, um drehend mit der Vertiefung (34) in Eingriff zu gelangen, so dass die Vertiefung (34) als Stütze für den Vorsprung (24) wirkt.

3. Elektrisches Schneidgerät nach Anspruch 1, wobei das zweite Tragemittel (24, 34, 27, 37) einen Vorsprung (37) am Befestigungskörper (30) und eine Vertiefung (27) am zweiten Ende (23) des Ritzelzahnrads (20) umfasst, wobei der Vorsprung (37) des Befestigungskörpers (30) ausgelegt ist, um drehend mit der Vertiefung (27) in Eingriff zu gelangen, so dass der Vorsprung (37) als Stütze für den Vorsprung (27) wirkt.

4. Elektrisches Schneidgerät nach Anspruch 2 oder 3, wobei der Vorsprung (24, 37) und die Vertiefung (34, 27) zylindrische Gestalt aufweisen, um eine drehbare Kupplung auszubilden.

5. Elektrisches Schneidgerät nach Anspruch 2 oder 3, wobei zwischen dem Vorsprung (24, 37) des Ritzelzahnrads (20) und der Vertiefung (34, 27) ein Mittel zum Verringern der Rotationsreibung (28, 38) vorgesehen ist.

6. Elektrisches Schneidgerät nach Anspruch 5, wobei das Mittel (28, 38) zum Verringern der Rotationsreibung ein Rollenlager umfasst.

7. Elektrisches Schneidgerät nach Anspruch 5, wobei das Mittel (28, 38) zum Verringern der Rotationsreibung eine Antireibungshülse, insbesondere eine Messinghülse, umfasst.

8. Elektrisches Schneidgerät nach Anspruch 1, wobei die erste Schneidklinge (2) einstückig mit der Zahnstange (15) ausgeführt ist, wohingegen die zweite Schneidklinge (2) eine Gegenschneide (3) ist, welche einstückig mit dem Befestigungskörper (30) ist.

9. Elektrisches Schneidgerät nach Anspruch 1, wobei der Befestigungskörper (30) des Weiteren umfasst:
- einen Eingriffsabschnitt (31), welcher ausgelegt ist, um den Befestigungskörper (30) und die zweite Klinge (3) miteinander in Eingriff zu bringen;
- einen Befestigungsabschnitt (32), welcher ausgelegt ist, um den Befestigungskörper am Griffkörper (25) zu befestigen;
- einen vertieften Abschnitt (33) für das Ritzelzahnrad (20), wobei der vertiefte Abschnitt (33) mit dem zweiten Tragemittel (24, 34, 27, 37) ausgerüstet ist.

10. Elektrisches Schneidgerät nach Anspruch 9, wobei der vertiefte Abschnitt (33) zwischen dem Eingriffsabschnitt (31) und dem Befestigungsabschnitt (32) angeordnet ist.

11. Elektrisches Schneidgerät nach Anspruch 9, wobei der vertiefte Abschnitt (33) eine Seitenöffnung (35) aufweist, wobei das Ritzelzahnrad (20) so ausgelegt ist, um mit der Zahnstange (15) durch die Seitenöffnung (35) hindurch zu kämmen.

12. Elektrisches Schneidgerät nach Anspruch 1, wobei das Ritzelzahnrad (20) ein konisches Ritzelzahnrad ist und die Zahnstange eine gebogene Zahnstange (15) ist.

13. Schneidgerät vom Elektrogerätetyp, insbesondere zum Beschneiden von Zweigen, Ranken und Ähnlichem, umfassend:
- wenigstens eine Batterie zum Versorgen mit einem gemessenen elektrischen Strom;
- ein Schneidgerät (1) umfassend ein Motormittel (10), welches betriebsbereit mit der oder jeder Batterie verbunden ist;
**dadurch gekennzeichnet, dass** es ein Schneidgerät (1) nach den Ansprüchen 1 bis 12 umfasst.

14. Schneidgerat vom Elektrogerätetyp nach Anspruch 13, wobei die oder jede Batterie eine Lithium-Batterie ist.

15. Schneidgerät vom Elektrogerätetyp nach Anspruch 14, wobei die oder jede Batterie eine Lithium-Batterie vom wiederaufladbaren Typ ist.

## Revendications

1. Outil de coupe électrique, notamment pour élaguer des branches, des vrilles et leur équivalent, comprenant :
- un corps de poignée (25) conçu pour être tenu par un utilisateur dudit outil de coupe (1) ;
- un moyen de motorisation (10) logé dans ledit corps de poignée (25) et connecté en fonctionnement à un moyen d'alimentation en énergie électrique, ledit moyen de motorisation (10) comprenant une partie de stator et un arbre d'entraînement (11) ;
- un corps de fixation (30) relié audit corps de poignée (25), ledit corps de fixation (30) faisant partie intégrante de ladite partie de stator ;
- des première et seconde lames de coupe (2, 3) pouvant s'approcher/s'écarter l'une de l'autre, lesdites première et seconde lames de coupe (2, 3) étant fixées audit corps de fixation (30) ;
- un moyen de transmission de mouvement conçu pour transmettre un mouvement dudit arbre d'entraînement (11) à au moins un élément parmi lesdites première et seconde lames de coupe (2, 3), ledit moyen de transmission comprenant :
- un engrenage à pinions (20) ayant une première extrémité (21) et une seconde extrémité (23) opposée à la première extrémité ;
- un premier moyen de support (11b, 22) conçu pour relier en fonctionnement ledit engrenage à pinions audit arbre d'entraînement (11) au niveau de ladite première extrémité (21) ;
- une crémaillère (15) conçue pour s'engrener avec ledit engrenage à pinions (20), ladite première lame de coupe (2) faisant partie intégrante de ladite crémaillère (15) ;
**caractérisé en ce que** :
ledit corps de fixation (30) comprend un second moyen de support (24, 34) conçu pour maintenir ledit engrenage à pinions (20) au niveau de ladite seconde extrémité (23), ledit second moyen de support (24, 34, 27, 37) étant conçu pour maintenir ledit engrenage à pinions (20) au niveau de ladite seconde extrémité (23) pour permettre une rotation libre par rapport audit corps de fixation (30) pour et simultanément pour libérer sur ledit corps de fixation (30) les contraintes de flexion se produisant entre ladite crémaillère (15) et ledit engrenage à pinions (20).

2. Outil de coupe électrique selon la revendication 1, dans lequel ledit second moyen de support (24, 34, 27, 37) comprend un renfoncement (34) réalisé dans ledit corps de fixation (30) et une saillie (24) s'étendant hors de ladite seconde extrémité (23) dudit engrenage à pinions (20) et conçue pour s'imbriquer de façon pivotante avec ledit renfoncement (34) de façon à ce que ledit renfoncement (34) serve de support pour ladite saillie (24).

3. Outil de coupe électrique selon la revendication 1, dans lequel ledit second moyen de support (24, 34, 27, 37) comprend une saillie (37) au niveau dudit corps de fixation (30) et un renfoncement (27) au niveau de ladite seconde extrémité (23) dudit engrenage à pinions (20), ladite saillie (37) dudit corps de fixation (30) étant conçue pour s'imbriquer de façon pivotante avec ledit renfoncement (27), de façon à ce que ladite saillie (37) serve de support pour ledit renfoncement (27).

4. Outil de coupe électrique, selon la revendication 2 ou 3, dans lequel ladite saillie (24, 37) et ledit renfoncement (34, 27) ont une forme cylindrique servant à former un couplage pouvant tourner.

5. Outil de coupe électrique selon la revendication 2 ou 3, dans lequel un moyen est prévu entre ladite saillie (24, 37) dudit engrenage à pinions (20) et ledit renfoncement (34, 27) pour réduire le frottement de la rotation (28, 38).

6. Outil de coupe électrique selon la revendication 5, dans lequel ledit moyen (28, 38) servant à réduire ledit frottement de rotation comprend un roulement à rouleaux.

7. Outil de coupe électrique selon la revendication 5, dans lequel ledit moyen (28, 38) de rédaction dudit frottement de rotation comprend une douille antifrottement, notamment un palier en laiton.

8. Outil de coupe électrique selon la revendication 1, dans lequel ladite première lame de coupe (2) fait partie intégrante de ladite crémaillère (15) tandis que ladite seconde lame de coupe (2) est une contre-lame (3) faisant partie intégrante dudit corps de fixation (30).

9. Outil de coupe électrique selon la revendication 1, dans lequel ledit corps de fixation (30) comprend en outre :
- une partie d'imbrication (31) conçue pour imbriquer le corps de fixation (30) et ladite seconde lame (3) l'une avec l'autre ;
- une partie de fixation (32) conçue pour fixer ledit corps de fixation audit corps de poignée (25) ;
- une partie renfoncée (33) prévue pour ledit engrenage à pinions (20), ladite partie renfoncée (33) étant équipés dudit second moyen de support (24, 34, 27, 37).

10. Outil de coupe électrique selon la revendication 9, dans lequel ladite partie renfoncée (33) est agencée entre ladite partie d'imbrication (31) et ladite partie de fixation (32).

11. Outil de coupe électrique selon la revendication 9, dans lequel ladite partie renfoncée (33) a une ouverture latérale (35), ledit engrenage à pinions (20) étant conçu pour s'engrener avec ladite crémaillère (15) à travers ladite ouverture latérale (35).

12. Outil de coupe électrique selon la revendication 1, dans lequel ledit engrenage à pinions (20) est un engrenage à pinions conique et ladite crémaillère est une crémaillère (15) incurvée.

13. Outil de coupe de type électrique, notamment pour élaguer des branches, des vrilles et leur équivalent, comprenant :
- au moins une batterie permettant d' amener un courant électrique mesuré ;
- un outil de coupe (1) comprenant un moyen de motorisation (10) connecté en fonctionnement à ladite ou auxdites batteries ;
**caractérisé en ce qu'**il comprend un outil de coupe (1), selon les revendications 1, à 12.

14. Outil de coupe de type électrique selon la revendication 13, dans lequel ladite ou lesdites batteries sont des batteries au lithium.

15. Outil de coupe de type électrique selon la revendication 14, dans lequel ladite ou lesdites batteries sont des batteries au lithium de type rechargeable.
